# EUROPÄISCHE PATENTANMELDUNG

(11) **EP 2 546 712 A1**
(43) Veröffentlichungstag der Anmeldung: **16.01.2013**
(21) Anmeldenummer: 11173565.0
(22) Anmeldetag: 12.07.2011
(51) Int. Cl.: G05B 19/4093, B25J 9/16

(54) **Verfahren zum Betrieb einer Produktionsmaschine**

(71) Anmelder: Siemens Aktiengesellschaft, 80333 München (DE)
(72) Erfinder: Bretschneider, Jochen, 73732 Esslingen (DE); Sinn, Christof, 75417 Mühlacker (DE); Spielmann, Ralf, 70569 Stuttgart (DE)

(57) **Zusammenfassung**

Es wird ein Verfahren zum Betrieb einer Produktionsmaschine (10) mit mehreren Achsen (12, 14; 20, 22, 24), wobei in einer Steuerungseinheit (40) der Produktionsmaschine (10) eine Folge von Bewegungsanweisungen (48) für die Achsen (12, 14; 20-24) gespeichert ist, angegeben, wobei in der Steuerungseinheit (40) Daten (50) zur Dynamik jeder Achse (12, 14; 20-24) gespeichert sind und wobei die Steuerungseinheit (40) anhand der Bewegungsanweisungen (48) und der Daten (50) zur Dynamik der Achsen (12, 14; 20-24) eine jeweils optimale Bewegung der Produktionsmaschine (10) ermittelt.

## Beschreibung

Die Erfindung betrifft ein Verfahren zum Betrieb einer Produktionsmaschine mit mehreren Achsen. Von dem Begriff Produktionsmaschine sind dabei speziell NC- oder CNC-Maschinen, Werkzeugmaschinen und Roboter umfasst. Derartige Produktionsmaschinen sind an sich bekannt. NC-gesteuerte Werkzeugmaschinen sind danach für eine sogenannte 2½D Bearbeitung als Dreiachsmaschinen und für einen 3D-Bearbeitung als Fünfachsmaschinen ausgeführt. Bei einer NC-Maschine mit fünf Achsen sind üblicherweise drei Achsen mit einer translatorischen Kinematik (Linearachsen) und zwei Achsen mit einer rotatorischen Kinematik (Rundachsen) vorgesehen. Bei Produktionsmaschinen der Eingangs genannten Art, die zur Verwendung eines oder mehrerer rotationssymmetrischer Werkzeuge (Löten, Schweißen, Bohren, Fräsen, etc.) vorgesehen sind, handelt es sich bei den Rundachsen um Achsen, die die Bewegungen "nicken" und "gieren" bewirken. Ein bei einer Roboterhand üblicherweise vorgesehener dritter rotatorischer Freiheitsgrad - "rollen" - ist aufgrund der Rotationssymmetrie des Werkzeugs nicht erforderlich.

Noch nicht ganz optimal ist bei Produktionsmaschinen der Eingangs genannten Art, dass eine Positionierung zum Beispiel des Werkzeugs häufig nur mit einer eindeutigen Konfiguration aller Achsen erreichbar ist. Dies lässt keinen Raum für Optimierungen des Bewegungsablaufs.

Verfahren zur expliziten Programmierung von Sechsachsmaschinen (Produktionsmaschinen mit sechs Achsen) werden heute mit einem CAD/CAM-System umgesetzt oder mit einem Postprozessor. Komplexe Betrachtungen hinsichtlich der Dynamik werden für Sechsachsmaschinen nicht durchgeführt. Bei der Fünfachsbearbeitung ist das nicht notwendig, da keine Redundanz der Rundachsen bei Verwendung eines rotationssymmetrischen Werkzeugs vorliegt. So werden heute nach dem besten Wissen der Erfinder keine Betrachtungen durchgeführt, welche die Dynamik der beteiligten Achsen oder den von den Achsen zurückzulegenden Weg einbeziehen. Bekannte Verfahren zur Programmierung von Sechsachsmaschinen im CAD/CAM-System nutzen eine Redundanz der Rundachsen nur für eine Positionierung der redundanten Rundachse in einem günstigen Bereich aus (zum Beispiel zur Vermeidung des Pols), um dann in diesem ausgesuchten Bereich weiter fünfachsig zu bearbeiten. Eine echte sechsachsige Simultanbearbeitung erfolgt nicht.

Eine Aufgabe des hier vorgestellten Ansatzes besteht entsprechend darin, ein Verfahren zum Betrieb einer Produktionsmaschine anzugeben, bei dem sich der Bewegungsablauf der Achsen oder einzelner Achsen im Hinblick auf bestimmte Kriterien optimieren lässt.

Diese Aufgabe wird erfindungsgemäß mit einem Verfahren mit den Merkmalen des Anspruchs 1 gelöst. Dazu ist bei einem Verfahren zum Betrieb einer Produktionsmaschine mit mehreren, zumindest teilweise redundanten Achsen, wobei in einen Programm für die Produktionsmaschine eine Folge von Bewegungsanweisungen für die Achsen gespeichert ist, vorgesehen, dass in einer Steuerungseinheit der Produktionsmaschine Daten zur Dynamik zumindest einzelner Achsen gespeichert sind und dass die Steuerungseinheit anhand der Bewegungsanweisungen und der Daten zur Dynamik der Achsen eine jeweils optimale Bewegung der Produktionsmaschine, also eine optimale Bewegung einer Mehrzahl der Achsen der Produktionsmaschine, ermittelt.

Der hier vorgestellte Ansatz geht dabei von der Erkenntnis aus, dass bei redundanten Achsen eine Position der Bearbeitungsmaschine - also zum Beispiel eine bestimmte Position eines von der Bearbeitungsmaschine geführten Werkzeugs - durch unterschiedliche Konfigurationen der Achsen erreicht werden kann. Wenn also ein und dieselbe Position der Bearbeitungsmaschine durch mindestens zwei verschiedene Konfigurationen der Achsen, insbesondere mindestens zwei verschiedene Konfigurationen der Rundachsen, erreicht werden kann, besteht Raum für Optimierungen, wenn nämlich zum Beispiel eine der Konfigurationen schneller erreicht werden kann, weil das Erreichen dieser Konfigurationen minimale Wege beinhaltet, usw.

Die oben genannte Aufgabe wird auch mit einer Steuerungseinrichtung zur Steuerung einer Produktionsmaschine der Eingangs genannten Art gelöst, die nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung oder eine Produktionsmaschine, in deren Speicher als Mittel zur Durchführung des Verfahrens und seiner Ausgestaltungen ein solches Computerprogramm geladen oder ladbar ist.

Der Vorteil des hier vorgestellten Ansatzes besteht darin, dass sich aufgrund der jetzt möglichen Optimierung eine Verkürzung von Produktionszeiten, eine Verringerung von Belastungen der Produktionsmaschine, usw. erreichen lässt.

Die Programmierung von Sechsachsmaschinen mit drei Linearachsen und drei Rundachsen erfolgt heute in einem vorgelagerten Programmiersystem (oben als CAD/CAM-System bezeichnet). Mit dem Programmiersystem wird die Position eines in der Fachterminologie als Tool Center Point (TCP) bezeichneten Werkzeugmittelpunktes durch Angabe der dafür notwendigen Konfigurationen der Linearachsen angegeben (es wird also die Position des TCP in den drei Raumkoordinaten x, y und z spezifiziert). Die jeweils notwendige Orientierung des Werkzeugs wird über eine direkte Programmierung der Rundachsen vorgegeben. Eine Folge solcher Daten sind Bewegungsanweisungen für die jeweilige Produktionsmaschine und im Betrieb werden diese Bewegungsanweisungen nacheinander abgearbeitet. Bei einer solchen direkten Programmierung ist eine Optimierung durch die jeweilige Steuerungseinrichtung der Produktionsmaschine wenn überhaupt nur noch bedingt möglich. Erfolgt die Programmierung jedoch zum Beispiel über Euler- oder RPY-Winkel gemäß Winkeldefinition über A2, B2, C2 oder Richtungsvektoren über A3, B3, C3 oder über Voreilwinkel LEAD und Seitwärtswinkel TILT, kann die Steuerungseinrichtung in Rahmen vorgegebener Grenzen die optimalen Kombination der Positionen der Rundachsen (Rundachskonfigurationen) ermitteln und dabei die Redundanz der Rundachsen ausnutzen. Dadurch wird eine echte Sechsachssimultanbearbeitung möglich. Welche Konfiguration die Optimale ist, kann zum Beispiel über Eingangsdaten für das Verfahren (Sechsachstransformation) definiert werden. Hinsichtlich der Optimierung kommen unterschiedliche Kriterien in Betracht, nämlich insbesondere kürzeste Wege, höchste Dynamik, Verfahrbereichseinschränkungen, usw.

Der Vorteil des hier vorgestellten Ansatzes liegt in der Steuerungsintegration eines Verfahrens zur Ansteuerung von Sechsachsmaschinen um durch volle Ausschöpfung des Potentials einer Sechsachsmaschine die Genauigkeit von 3D-Bearbeitungen zu erhöhen, weil zum Beispiel eine vollständige Kompensation von Geometrieabweichungen der Achsen möglich ist. Des Weiteren kann zusätzlich oder alternativ die Bearbeitungszeit von 3D-Bearbeitungen reduziert werden, speziell bei Simultanbearbeitungen, und zwar durch Reduzierung von Achsausgleichbewegungen der Linearachsen und bewussten Einsatz von Achsen mit hoher Dynamik. Schließlich können zusätzlich oder alternativ zur Erhöhung der Oberflächenqualität auch Achsumkehrungen oder Polstellen vermieden werden. Verfahrbereichseinschränkungen können direkt berücksichtigt werden, so dass eine Implementierung des Verfahrens wie eine Mehrzahl von Softwareendschaltern fungiert.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: zwei Linearachsen einer Produktionsmaschine,
- FIG 2: ein Koordinatensystem zur Illustration einer Mehrzahl von Rundachsen,
- FIG 3: einen gerichteten Graph,
- FIG 4: ein Blockschaltbild einer Produktionsmaschine mit einer zu deren Steuerung vorgesehenen Steuerungseinrichtung und
- FIG 5: ein Steuerungsprogramm sowie Bewegungsanweisungen und Dynamikdaten als Inhalte eines Speichers der Steuerungseinrichtung und als Basis für die Ermittlung einer optimalen Bewegung der Produktionsmaschine.

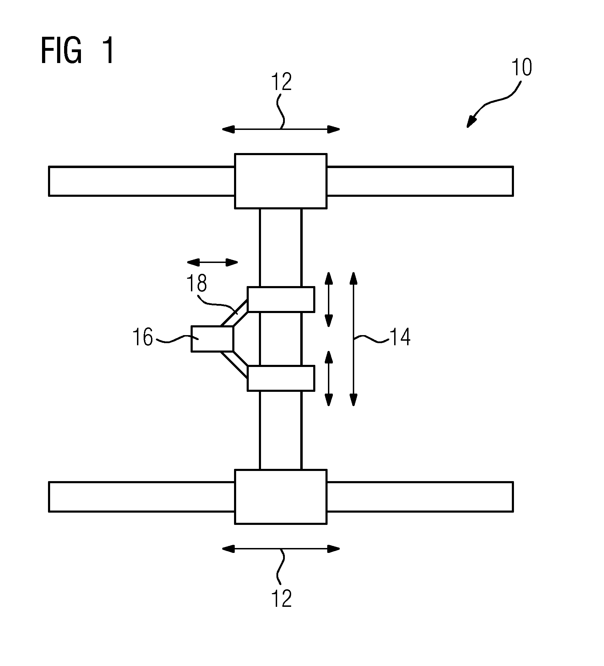

FIG 1 zeigt als Beispiel für eine Produktionsmaschine 10 einen Ausschnitt aus einer Großwerkzeugmaschine und dort schematisch vereinfacht eine mögliche Achsanordnung mit zwei translatorischen Freiheitsgraden. Ein erster Freiheitsgrad - eine erste Linearachse 12 - ermöglicht bei Bezugnahme auf die Ausrichtung der Darstellung eine Bewegung in horizontaler Richtung und ein zweiter Freiheitsgrad - zweite Linearachse 14 - ermöglich entsprechend eine Bewegung in vertikaler Richtung. Dadurch, dass die den zweiten Freiheitsgrad bildenden Elemente unabhängig voneinander beweglich sind und ein in der Fachterminologie als Tool Center Point (TCP) bezeichneter Werkzeugmittelpunkt 16 über eine Scherenmechanik 18 beweglich ist, ergibt sich bei einer unabhängigen vertikalen Beweglichkeit der Elemente des zweiten Freiheitsgrades eine zusätzliche Positionierungsmöglichkeit in der Bewegungsrichtung des ersten Freiheitsgrades 12. Dies wird in der Fachterminologie und auch hier als redundante Achsen bezeichnet.

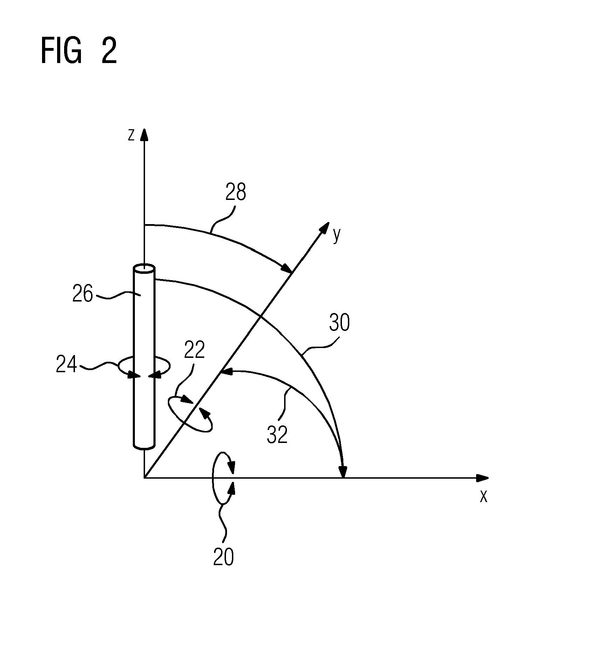

FIG 2 zeigt ein kartesisches Koordinatensystem zur Beschreibung redundanter Rundachsen. Dabei wird für einfache Verhältnisse angenommen, dass sich im Ursprung des Koordinatensystems drei Rundachsen befinden, die jeweils eine Nickbewegung um eine der drei Koordinatenachsen ermöglichen. Entsprechend der üblichen Bezeichnung der Achsen des Koordinatensystems als x-, y- und z-Achse werden die Rundachsen als A-Achse 20, B-Achse 22 und C-Achse 24 bezeichnet, wobei die A-Achse 20 eine Nickbewegung um die x-Achse, die B-Achse 22 eine Nickbewegung um die y-Achse und die C-Achse 24 eine Gierbewegung um die z-Achse erlaubt.

Man erkennt, dass ausgehend von einer Konfiguration, bei der ein Werkzeug 26 als in Richtung der z-Achse orientiert angenommen wird, eine Konfiguration, in der das Werkzeug 26 in Richtung der y-Achse orientiert ist, auf zumindest zwei Wegen erreichbar ist: Entweder erfolgt eine Rotation der A-Achse 20 um 90° (nicken um die x-Achse um 90°), wie dies durch den ersten Pfeil 28 angedeutet ist, oder es erfolgt - simultan oder nacheinander - eine Rotation der B-Achse 22 um 90° (nicken um die y-Achse um 90°) und eine Rotation der C-Achse 24 um 90° (gieren um die z-Achse um 90°), wie dies durch den zweiten und dritten Pfeil 30, 32 angedeutet ist.

Die unterschiedlichen Bewegungsabläufe können allgemein wie folgt dargestellt werden, wobei jede Spalte der nachfolgenden Tabelle einen Bewegungsabschnitt darstellt:

| | | | | |
|---|---|---|---|---|
| A-Achse: | 90° | B-Achse: 90° | B-Achse: 90°, | C-Achse: 90° |
| | | C-Achse: 90° | | |

Die linke Spalte der Tabelle bedeutet also, dass nur die A-Achse 20 um 90° bewegt wird. Die mittlere Spalte bedeutet, dass zunächst die B-Achse 22 um 90° und im Anschluss daran die C-Achse um ebenfalls 90° bewegt wird. Die rechte Spalte bedeutet, das die B-Achse 22 und die C-Achse 24 gleichzeitig, insbesondere simultan, um jeweils 90° bewegt werden.

Mit jeder der Bewegungsalternativen kann nun ein Bewertungsschema verbunden werden. Wenn sich zum Beispiel anhand von Daten zur Dynamik der Achsen - zum Beispiel Maximalgeschwindigkeit, Beschleunigung, Ruck, usw. - ergibt, dass die A-Achse 20 einen 90°-Schwenk in zehn Sekunden ausführen kann und die B-Achse 22 und die C-Achse 24 einen 90° Schwenk in nur fünf Sekunden ausführen können, ergibt sich das folgende Bewertungsschema:

| | | |
|---|---|---|
| 10 sek. | 5 sek. | 5 sek. |
| | 5 sek. | |

Eine Bewegung nur der A-Achse 20 (siehe oben, linke Spalte) dauert also zehn Sekunden. Eine Bewegung zunächst der B-Achse 22 und danach der C-Achse 24 (siehe oben, mittlere Spalte) dauert für jeden einzelnen Bewegungsabschnitt fünf Sekunden und demnach insgesamt ebenfalls zehn Sekunden. Eine gleichzeitige Bewegung der B- und C-Achse 22, 24 (siehe oben, rechte Spalte) dauert hingegen nur fünf Sekunden. Diese letztere Bewegung ist damit in diesem Szenario und bei der Dauer der Bewegungen als Optimierungskriterium die optimale Bewegung der Produktionsmaschine 10.

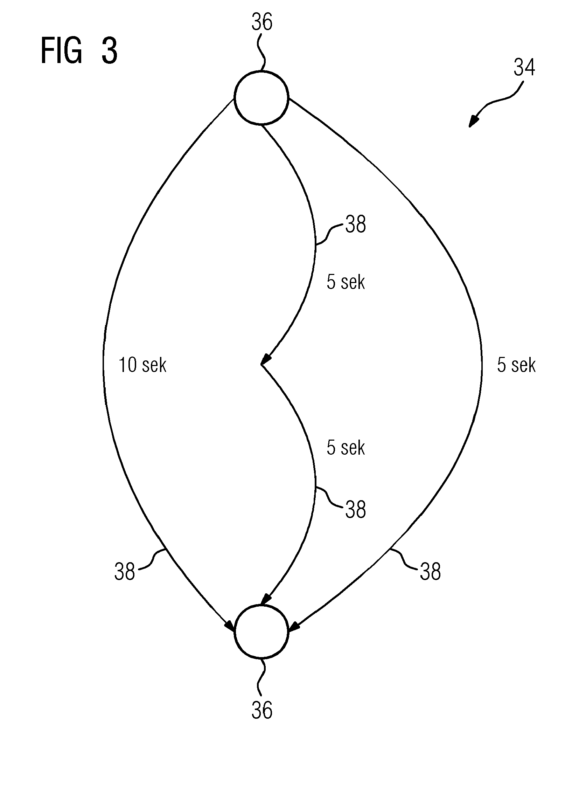

FIG 3 zeigt dazu eine Darstellung eines sogenannten gerichteten Graphen 34. Solche Graphen 34 umfassen sogenannte Knoten 36 und zwischen den Knoten verlaufende sogenannte Kanten 38. Mit jeder Kante 38 kann ein sogenanntes Gewicht assoziiert sein. Ein Beispiel für ein solches Gewicht ist ein Maß für die Entfernung zwischen zwei Knoten 36. Insoweit ist ein Graph 34 ein bekanntes Hilfsmittel für die Lösung des sogenannten Rundreiseproblems (Travelling Salesman Problem - TSP), wenn nämlich die Knoten 34 Orte, z.B. Städte, repräsentieren, die der Reisende besuchen muss, die Kanten 38 mögliche Wege zwischen diesen Orten und die Gewichte der Kanten 38 schließlich Entfernungen oder eine Dauer beim Zurücklegen der entsprechenden Strecke. Durch Auswertung des Graphen 34 kann ein sogenannter kürzester Weg in dem Graphen 34 ermittelt werden und der "kürzeste Weg" bezieht sich je nach den als Maß für die Gewichte der Kanten 38 verwendeten Größen auf den streckenmäßig kürzesten Weg, den zeitlich kürzesten Weg, den Weg mit geringstem Energiebedarf, usw. Eine Lösung des Travelling Salesman Problems ist mit dem Algorithmus von Dijkstra an sich bekannt. Andere Verfahren zur Berechnung kürzester Wege in Graphen sind der A*-Algorithmus, der Bellman-Ford-Algorithmus und der Algorithmus von Floyd und Warshall. Diese Algorithmen und gegebenenfalls weitere Algorithmen kommen grundsätzlich zur Ermittlung optimaler Bewegungen der Produktionsmaschine 10 in Betracht.

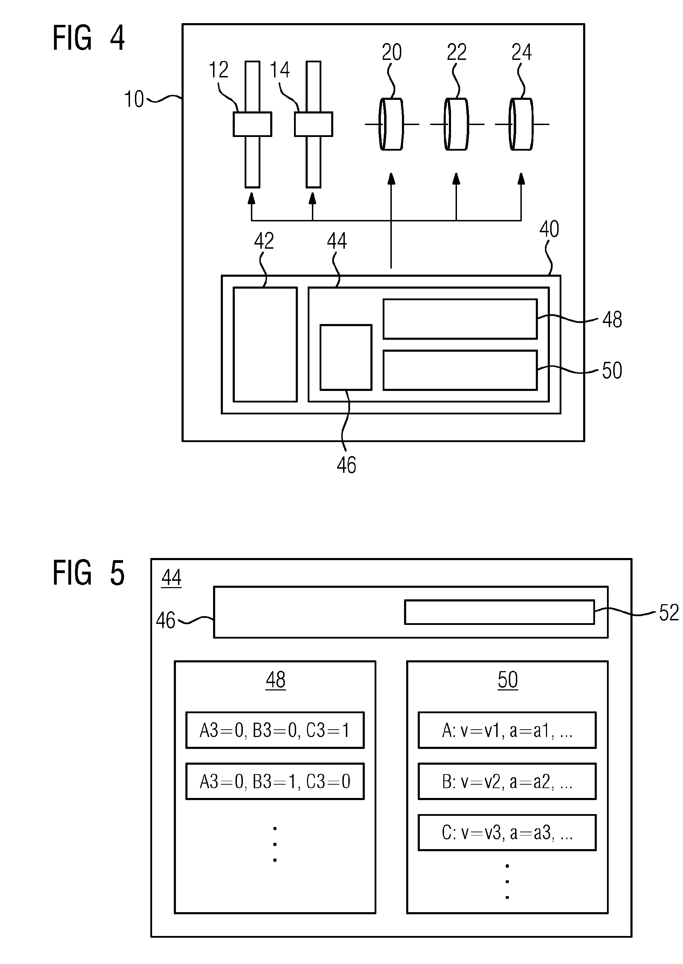

In der Darstellung in FIG 3 ist der Graph 34 bereits mit Kanten 38 für das in FIG 2 gezeigte Bewegungsszenario dargestellt. Ausgehend von der durch den oberen Knoten 34 repräsentierten Startposition (Orientierung des Werkzeugs in Richtung der z-Achse) gibt es die drei oben bereits skizzierten Möglichkeiten zum Erreichen der durch den unteren Knoten 34 repräsentierten Zielposition (Orientierung des Werkzeugs in Richtung der y-Achse). Diese drei Möglichkeiten (vgl. die oben dargestellten Tabellen) sind in dem Graph 34 als Wege und die Wege durch jeweils zumindest eine Kante 38 repräsentiert. Mit jeder Kante 38 ist ein Gewicht assoziiert und als Gewicht ist hier jeweils die Dauer des Bewegungsabschnitts dargestellt. Der "kürzeste" (oder schnellste) Weg in dem in FIG 3 gezeigten Graph 34 ist der Weg entlang der ganz rechts dargestellten Kante 38 mit dem Gewicht "5 Sekunden". Indem durch Auswertung eines solchen Graphen 34 oder auf sonst geeignete Art und Weise ermittelbar ist, welche von mehreren möglichen Bewegungsabläufen in einem konkreten Szenario und mit konkreten Optimalitätskriterien (z.B. Zeit, Strecke, Energiebedarf, etc.) der Günstigste ist, kann eine Steuerungseinrichtung 40 (FIG 4) für die jeweilige Produktionsmaschine 10 genau einen Bewegungsablauf aus mehreren möglichen Bewegungsabläufen auswählen und den ausgewählten Bewegungsablauf für die Ansteuerung der Produktionsmaschine 10 und der jeweiligen Achsen 12, 14, 20, 22, 24 verwenden.

FIG 4 zeigt nochmals die Produktionsmaschine 10 - ebenfalls in schematisch stark vereinfachter Darstellung. Gezeigt sind zwei Linearachsen 12, 14 und drei Rundachsen 20, 22, 24. Die Produktionsmaschine 10 umfasst die Steuerungseinrichtung 40 oder ist mit einer solchen Steuerungseinrichtung 40 kommunikativ verbunden. Die Steuerungseinrichtung 40 umfasst eine Verarbeitungseinheit 42 nach Art oder in Form eines Mikroprozessors und einen Speicher 44. In dem Speicher 44 ist ein Steuerungsprogramm 46 zur Steuerung und Überwachung der Produktionsmaschine 10 abgelegt. Im Betrieb der Produktionsmaschine 10 wird das Steuerungsprogramm 46 durch die Verarbeitungseinheit 42 ausgeführt und dabei ergibt sich mit der jeweiligen Ansteuerung der Achsen 12, 14; 20-24 eine Bewegung der Produktionsmaschine 10 und insgesamt ein im Wesentlichen vorgegebener Bewegungsablauf, so dass mit einem oder mehreren Werkzeugen ein (nicht dargestelltes) Werkstück gefertigt wird. Das Steuerungsprogramm 46 verarbeitet dabei Bewegungsanweisungen 48, üblicherweise eine Folge von Bewegungsanweisungen 48, die ebenfalls in dem Speicher 44 abgelegt sind und je nach Anwendungssituation der Produktionsmaschine 10 angepasst werden (zum Beispiel zum Fertigen unterschiedlicher Werkstücke). Für den hier beschriebenen Ansatz ist erforderlich, dass die Steuerungseinheit 40 Zugriff auf Daten zur Dynamik jeder Achse 12, 14; 20-24 - Dynamikdaten 50 - hat. Im dargestellten Szenario ergibt sich diese Zugriffsmöglichkeit, indem die Dynamikdaten 50 in dem Speicher 44 hinterlegt sind.

Auf dieser Grundlage kann die Steuerungseinheit 40 anhand der Bewegungsanweisungen 48 und der Dynamikdaten 50 eine jeweils optimale Bewegung der Produktionsmaschine 10 ermitteln. Dazu zeigt FIG 5 eine Detailansicht der Steuerungseinheit 40 mit weiteren Details.

FIG 5 zeigt schematisch vereinfacht den Inhalt des Speichers 44 der Steuerungseinheit 40. Als Bewegungsanweisungen 48 sind Richtungsvektoren für die Orientierung der Rundachsen 20-24 dargestellt, wobei "A3=0, B3=0, C3=1" eine Orientierung in Richtung der z-Achse und "A3=0, B3=1,C3=0" eine Orientierung in Richtung der y-Achse meint. Die erste in FIG 5 gezeigte Bewegungsanweisung 48 beschreibt also die Anfangsorientierung gemäß der Darstellung in FIG 2 und die darauf folgende Bewegungsanweisung 48 beschreibt die Zielorientierung gemäß dem in FIG 2 angenommenen Szenario.

Mit diesen Daten, nämlich den Bewegungsanweisungen 48 und den Dynamikdaten 50, kann zum Beispiel ein Graph 34 wie in FIG 3 dargestellt erstellt werden. Zumindest können Tabellen mit den Bewegungsabläufen und Bewertungsschemata wie oben dargestellt erstellt werden. Wenn die Ermittlung einer optimalen Bewegung auf Basis eines Graphen 34 erfolgt, umfasst das Steuerungsprogramm 46 eine Implementation 52 eines Algorithmus zur Ermittlung kürzester Wege in einem Graphen 34, zum Beispiel eine Implementation des Algorithmus von Dijkstra. Die Gewichte der Kanten 38 des Graphen 34 ergeben sich dann anhand der Dynamikdaten 50 für jede Achse 12, 14; 20-24. In der Darstellung in FIG 5 sind nur symbolische Dynamikdaten 50 für die Rundachsen 20-24 gezeigt, nämlich symbolisch angegebene Maximalgeschwindigkeiten v1, v2, v3 und symbolisch angegebenen Maximalbeschleunigungen a1, a2, a3. Als Dynamikdaten 50 kommen grundsätzlich auch nur Geschwindigkeiten oder nur höhere Ableitungen des Weges über der Zeit in Betracht.

Zu bemerken ist, dass der in FIG 3 dargestellte Graph 34 ein ausgesprochen einfacher Graph ist. Die Darstellung bezieht sich dabei auf das exemplarisch angenommene Bewegungsszenario gemäß FIG 2. Selbstverständlich sind deutlich komplexere und umfangreichere Graphen möglich und die Optimierung ist nicht nur auf die sich aufgrund der Redundanz der Rundachsen 20, 22, 24 gegebenen unterschiedlichen Bewegungsmöglichkeiten beschränkt sondern kann auch die Linearachsen 12, 14 einbeziehen. Es kann sich nämlich ohne Weiteres ergeben, dass die Produktionsmaschine 10 eine bestimmte Position, für die an sich zunächst eine Bewegung einer Linearachse vorgesehen war, schneller oder nach sonstigen Kriterien günstiger durch eine Bewegung einer oder mehrerer Rundachsen 20, 22, 24 erreichen kann.

Als Kriterien für die steuerungstechnische Optimierung des Bewegungsablaufs der Produktionsmaschine 10 kommen insbesondere in Betracht:
Kürzester Weg der Rundachsen 20, 22, 24,
kürzester Weg der Rundachsen 20, 22, 24 und der Kompensationsachsen (Linearachsen 12, 14),
höchste Dynamik der Rundachsen 20, 22, 24,
höchste Dynamik der Rundachsen 20, 22, 24 und der Kompensationsachsen,
Verfahrbereichseinschränkungen der Rundachsen 20, 22, 24 sowie
Verfahrbereichseinschränkungen der Rundachsen 20, 22, 24 und der Kompensationsachsen.

Wenn für eine gewünschte Zielkonfiguration eine Bewegung einer bestimmten Achse unerheblich ist oder wenn eine bestimmte Achse die für die Zielkonfiguration notwendige Orientierung nicht annehmen kann , bietet es sich an, in dem resultierenden Graph die entsprechende Kante 38 entweder gar nicht vorzusehen oder die Kante 38 mit einem sehr hohen Gewicht zu versehen, so dass die Kante 38 nicht als Bestandteil des zu ermittelnden kürzesten Wegs in Betracht kommt. Beispielhaft sei in diesem Zusammenhang eine Rundachse erwähnt, die einen Bewegungsbereich von 0° bis 360° aufweist, also genau eine Vollumdrehung ausführen kann und insofern eine Verfahrbereichseinschränkung aufweist. Wenn sich eine solche Achse in einer Winkelstellung von 320° befindet und die Zielkonfiguration eine Winkelstellung von 20° fordert, kommt es demnach nicht in Betracht die Achse weiter in Richtung 360° und über den Nullpunkt bis zum Erreichen der 20°-Position zu rotieren. Ein solcher Weg ist also - auch wenn er vergleichsweise kurz ist - nicht möglich und ist im Graph 34 zu löschen oder zumindest mit einem ausreichend hohen Gewicht zu versehen. Stattdessen muss eine Kante 38 in den Graph 34 aufgenommen werden, der eine Rückwärtsdrehung der Achse von 320° auf die 20°-Position repräsentiert. Dieser Weg ist vergleichsweise lang und hier kann sich die Situation ergeben, dass die Zielkonfiguration auch durch eine Bewegung der anderen Rundachsen und/oder der Linearachsen erreicht werden kann und zwar schneller oder effizienter erreicht werden kann.

Einzelne im Vordergrund stehende Aspekte der hier eingereichten Beschreibung lassen sich damit kurz wie folgt zusammenfassen: Mit dem hier vorgestellten Ansatz wird es bei einer Produktionsmaschine 10 mit redundanten Rundachsen möglich, den Bewegungsablauf zu optimieren. Ein Ergebnis der Optimierung kann dabei sein, dass eine bestimmte Sollkonfiguration schneller oder auf kürzerem Weg oder mit minimalem Energieaufwand erreicht wird. Wenn neben den Rundachsen auch die Linearachen einer Produktionsmaschine 10 in die Optimierung einbezogen werden, gelingt unter Umständen die Vermeidung großer Ausgleichsbewegungen der Linearachsen speziell in der Näher der Polstellung.

## Patentansprüche

1. Verfahren zum Betrieb einer Produktionsmaschine (10) mit mehreren Achsen (12, 14; 20, 22, 24),
wobei in einer Steuerungseinheit (40) der Produktionsmaschine (10) eine Folge von Bewegungsanweisungen (48) für die Achsen (12, 14; 20-24) gespeichert ist,
wobei in der Steuerungseinheit (40) Daten (50) zur Dynamik jeder Achse (12, 14; 20-24) gespeichert sind,
wobei die Steuerungseinheit (40) anhand der Bewegungsanweisungen (48) und der Daten (50) zur Dynamik der Achsen (12, 14; 20-24) eine jeweils optimale Bewegung der Produktionsmaschine (10) ermittelt.

2. Verfahren nach Anspruch 1, wobei die Produktionsmaschine (10) zumindest drei Rundachsen (20, 22, 24) umfasst und wobei die Steuerungseinheit (40) eine optimale Bewegung der Produktionsmaschine (10) unter Berücksichtigung einer gegebenen Redundanz der zumindest drei Rundachsen (20-24) ermittelt.

3. Verfahren nach Anspruch 1 oder 2, wobei die Steuerungseinrichtung (40) zur Ermittlung einer optimalen Bewegung der Produktionsmaschine (10) Kriterien wie eine Geschwindigkeit der Achsen, insbesondere der Rundachsen (20-24), oder eine Weglänge der Achsen, insbesondere der Rundachsen (20-24), berücksichtigt.

4. Computerprogramm mit Programmcode-Mitteln, um alle Schritte von jedem beliebigen der Ansprüche 1 bis 3 durchzuführen, wenn das Programm durch eine Steuerungseinrichtung (40) für eine Produktionsmaschine (10) ausgeführt wird.

5. Digitales Speichermedium mit elektronisch auslesbaren Steuersignalen, die so mit einer programmierbaren Steuerungseinrichtung (40) für eine Produktionsmaschine (10) zusammenwirken können, dass ein Verfahren nach einem der Ansprüche 1 bis 3 ausgeführt wird.

6. Computerprogrammprodukt mit Programmcode-Mitteln, die auf einem computerlesbaren Datenträger gespeichert sind, um das Verfahren nach jedem beliebigen der Ansprüche 1 bis 3 durchzuführen, wenn das Computerprogrammprodukt auf einer Steuerungseinrichtung (40) für eine Produktionsmaschine (10) ausgeführt wird.

7. Produktionsmaschine (10) mit einer Steuerungseinrichtung (40) mit einer Verarbeitungseinheit (42) und einem Speicher (44) in den ein Computerprogramm nach Anspruch 4 geladen ist, das im Betrieb der Produktionsmaschine (10) durch die Verarbeitungseinheit (42) ausgeführt wird.

## Geänderte Patentansprüche

### Geänderte Patentansprüche gemäss Regel 137(2) EPÜ.

**1.** Verfahren zum Betrieb einer Produktionsmaschine (10) mit mehreren, zumindest teilweise redundanten Achsen (12, 14; 20, 22, 24),
wobei in einer Steuerungseinheit (40) der Produktionsmaschine (10) eine Folge von Bewegungsanweisungen (48) für die Achsen (12, 14; 20-24) gespeichert ist,
wobei in der Steuerungseinheit (40) Daten (50) zur Dynamik jeder Achse (12, 14; 20-24) gespeichert sind,
wobei die Steuerungseinheit (40) anhand der Bewegungsanweisungen (48) und der Daten (50) zur Dynamik der Achsen (12, 14; 20-24) eine jeweils optimale Bewegung der Produktionsmaschine (10) ermittelt,
wobei die Produktionsmaschine (10) zumindest drei Rundachsen (20, 22, 24) umfasst und wobei die Steuerungseinheit (40) eine optimale Bewegung der Produktionsmaschine (10) unter Berücksichtigung einer gegebenen Redundanz der zumindest drei Rundachsen (20-24) ermittelt.

**2.** Verfahren nach Anspruch 1, wobei die Steuerungseinrichtung (40) zur Ermittlung einer optimalen Bewegung der Produktionsmaschine (10) Kriterien wie eine Geschwindigkeit der Achsen, insbesondere der Rundachsen (20-24), oder eine Weglänge der Achsen, insbesondere der Rundachsen (20-24), berücksichtigt.

**3.** Computerprogramm mit Programmcode-Mitteln, um alle Schritte von jedem beliebigen der Ansprüche 1 bis 2 durchzuführen, wenn das Programm durch eine Steuerungseinrichtung (40) für eine Produktionsmaschine (10) ausgeführt wird.

**4.** Digitales Speichermedium mit elektronisch auslesbaren Steuersignalen, die so mit einer programmierbaren Steuerungseinrichtung (40) für eine Produktionsmaschine (10) zusammenwirken können, dass ein Verfahren nach einem der Ansprüche 1 bis 2 ausgeführt wird.

**5.** Computerprogrammprodukt mit Programmcode-Mitteln, die auf einem computerlesbaren Datenträger gespeichert sind, um das Verfahren nach jedem beliebigen der Ansprüche 1 bis 2 durchzuführen, wenn das Computerprogrammprodukt auf einer Steuerungseinrichtung (40) für eine Produktionsmaschine (10) ausgeführt wird.

**6.** Produktionsmaschine (10) mit einer Steuerungseinrichtung (40) mit einer Verarbeitungseinheit (42) und einem Speicher (44) in den ein Computerprogramm nach Anspruch 3 geladen ist, das im Betrieb der Produktionsmaschine (10) durch die Verarbeitungseinheit (42) ausgeführt wird.
